# EUROPÄISCHE PATENTSCHRIFT

(11) **EP 0 613 755 B1**
(45) Veröffentlichungstag und Bekanntmachung des Hinweises auf die Patenterteilung: **16.04.1997**
(21) Anmeldenummer: 93115407.4
(22) Anmeldetag: 24.09.1993
(51) Int. Cl.: B23Q 11/08

(54) **Werkzeugmaschine**
Machine tool
Machine-outil

(30) Priorität: 27.02.1993 DE 4306093
(43) Veröffentlichungstag der Anmeldung: 07.09.1994
(73) Patentinhaber: CHIRON-WERKE GMBH & CO. KG, D-78532 Tuttlingen (DE)
(72) Erfinder: Rütschle, Eugen, D-78570 Mühlheim (DE); Haninger, Rudolf, D-78606 Seitingen (DE)
(74) Vertreter: Witte, Alexander, Dr.-Ing.

(56) Entgegenhaltungen:
- EP-A- 0 313 872
- EP-A- 0 329 982
- EP-A- 0 331 178

## Beschreibung

Die Erfindung betrifft eine Werkzeugmaschine mit einem um eine vertikale Achse drehbaren Werkstücktisch, der mittels einer im wesentlichen entlang eines Durchmessers des Werkstücktisches am Werkstücktisch befestigten ersten Spritzschutzwand in eine Bestückungsseite und eine Bearbeitungsseite unterteilt ist, mit einer raumfesten, oberhalb der ersten Spritzschutzwand angeordneten zweiten Spritzschutzwand, die im wesentlichen parallel zur ersten Spritzschutzwand verläuft, und mit gelenkigen Verbindungsmitteln zwischen der ersten und der zweiten Spritzschutzwand, die an einer Oberkante der ersten Spritzschutzwand angreifen, wobei die erste Spritzschutzwand starr mit dem Werkstücktisch verbunden ist und die Verbindungsmittel eine dritte Spritzschutzwand umfassen, die an ihrer Oberseite scharnierartig mit der zweiten Spritzschutzwand verbunden ist.

Eine Werkzeugmaschine der vorstehend genannten Art ist aus der EP-A-0 313 872 bekannt.

Bei einer weiteren, aus der EP-A-0 329 982 bekannten Werkzeugmaschine ist die ersten Spritzschutzwand mit einem Scharnier am Werkstücktisch befestigt, so daß sie um die horizontale Scharnierachse schwenkbar ist. Der Werkstücktisch ist um jeweils 180° gegenläufig verdrehbar, damit nacheinander die Bearbeitungsseite und die Bestückungsseite von den gegenüberliegenden Hälften der Werkstücktisch-Oberfläche gebildet wird. In den Dreh-Endstellungen des Werkstücktisches befindet sich die erste Spritzschutzwand in einer geneigten Stellung, so daß der Raum oberhalb des Werkstücktisches asymmetrisch unterteilt ist. Der Raum oberhalb des Werkstücktisches ist nämlich auf der Bearbeitungsseite größer bemessen, damit ein relativ ausladender Spindelstock mit einem Werkzeug bis an den Durchmesser des Werkstücktisches herangefahren werden kann, während der Raum oberhalb des Werkstücktisches auf der Bestückungsseite wesentlich kleiner bemessen ist. Dies ist jedoch ausreichend, um lediglich bearbeitete Werkstücke abnehmen und neue, noch unbearbeitete Werkstücke aufspannen zu können.

Damit die erste, schwenkbare Spritzschutzwand bei der bekannten Werkzeugmaschine der Drehbewegung des Werkstücktisches folgen kann, ist oberhalb der Bestückungsseite die untere Kante der zweiten, raumfesten Spritzschutzwand angeordnet. Im Zentrum dieser Unterkante befindet sich eine nach unten geöffnete, drehbare Gabel, die um die verdickt ausgebildete Oberkante der ersten Spritzschutzwand beidseitig herumgreift.

Bei der Drehung des Werkstücktisches bewegt sich daher die verdickte Oberkante der ersten Spritzschutzwand senkrecht zwischen den Zinken der Gabel, während die Gabel gleichzeitig um ihre Vertikalachse verdreht wird. Bei dieser Drehbewegung des Werkstücktisches wandert die Gabel darüberhinaus in Längsrichtung an der Oberkante der ersten Spritzschutzwand entlang.

Bei der aus der eingangs erwähnten EP-A-0 313 872 bekannten Werkzeugmaschine umfaßt die dritte Spritzschutzwand zwei Spritzschutzelemente in Form von zwei elastischen Lappen oder zwei scharnierartig aufgehängten Blechen, wobei die beiden Lappen oder Bleche in Richtung des Durchmessers des Werkstücktisches hintereinander angeordnet sind und im Bereich der vertikalen Drehachse des Werkstücktisches zwischen sich einen Schlitz frei lassen, der eine Breite aufweist, die der Dicke der feststehenden ersten Spritzschutzwand entspricht. Der erste der beiden Lappen überlappt die erste Spritzschutzwand auf der Bestückungsseite und der andere der beiden Lappen auf der Bearbeitungsseite, so daß die feststehende Spritzschutzwand mit ihrer Oberkante sozusagen in diese dritte Spritzschutzwand eingefädelt ist. Beim Drehen des Werkstücktisches verdreht sich die feststehende erste Spritzschutzwand in dieser Lücke, wobei die beiden Lappen oder Bleche frei nach unten hängen.

Um ein Verklemmen zu vermeiden, muß die Lücke symmetrisch zu der vertikalen Drehachse des Werkstücktisches ausgerichtet sein.

Darüber hinaus ist bei der bekannten Werkzeugmaschine von Nachteil, daß es wegen des erforderlichen Schlitzes nicht zu der gewünschten guten Abdichtung zwischen Bearbeitungsseite und Bestückungsseite kommt, so daß Bohrwasser und Späne durch den Schlitz hindurch auf die Bestückungsseite gelangen können.

Ausgehend von diesen Werkzeugmaschinen liegt der Erfindung die Aufgabe zugrunde, eine Anordnung mit noch weniger mechanischen Elementen zu schaffen, die besonders einfach im Aufbau ist und eine besonders gute Dichtwirkung garantiert.

Diese Aufgabe wird erfindungsgemäß dadurch gelöst, daß die dritte Spritzschutzwand mit ihrer Unterseite auf der Oberkante aufliegt, wobei die scharnierartige Verbindung zwischen der Oberseite der dritten Spritzschutzwand und der zweiten spritzschutzwand gegenüber der ersten Spritzschutzwand zur Bestückungsseite seitlich versetzt ist.

Die der Erfindung zugrunde liegende Aufgabe wird auf diese Weise vollkommen gelöst.

Die erfindungsgemäße Werkzeugmaschine hat daher lediglich ein bewegtes Element, nämlich die entlang eines Scharnieres eingehängte dritte Spritzschutzwand. Der Aufbau ist somit extrem einfach und damit störunanfällig.

In diesem Zusammenhang ist bevorzugt, wenn die dritte Spritzschutzwand vorzugsweise als einstückiges Wandteil ausgebildet ist.

Die dritte Spritzschutzwand ist vorzugweise mit einer Rinne versehen, die die Oberkante über eine endliche Länge umschließt. In den Dreh-Endstellungen des Werkstücktisches umfaßt nämlich die sich nach unten öffnende Rinne der dritten Spritzschutzwand die Oberkante der ersten Spritzschutzwand, vorzugsweise über deren gesamte Länge, so daß in diesen Endstellungen eine vollkommene Abdichtung zwischen Bearbeitungsseite und Bestückungsseite hergestellt ist. Hierzu trägt auch das Scharnier an der Oberseite der dritten Spritzschutzwand bei, das seinerseits eine dichte Verbindung zur zweiten, raumfesten Spritzschutzwand darstellt.

Wenn sich der Werkstücktisch um 180° dreht, gleitet die Oberkante der ersten Spritzschutzwand aus der Rinne heraus, läuft an deren unterem Rand entlang und fällt schließlich in der gegenüberliegenden Dreh-Endstellung wieder in die Rinne ein.

Bei einer weiteren bevorzugten Ausgestaltung der erfindungsgemäßen Werkzeugmaschine wird die Oberkante durch eine Leiste eines gleitfähigen Materials gebildet.

Diese Maßnahme hat den Vorteil, daß die erste Spritzschutzwand aus einem beliebigen Material hergestellt werden kann und lediglich die Oberkante durch eine Leiste aus einem speziellen Material, beispielsweise einem Polytetrafluorethylen, gebildet werden muß. Auf diese Weise kann man auch bei häufiger Betätigung des Werkstücktisches erreichen, daß der Abrieb im Bereich der Rinne/Oberkante minimal bleibt.

Weiterhin ist eine Ausführungsform der Erfindung bevorzugt, bei der die zweite Spritzschutzwand geneigt verläuft.

Diese Maßnahme hat den bereits weiter oben erwähnten Vorteil, daß der Raum oberhalb des Werkstücktisches asymmetrisch unterteilt werden kann, um einem ausladenden Spindelstock auf der Bearbeitungsseite genügend Bewegungsspielraum zu geben.

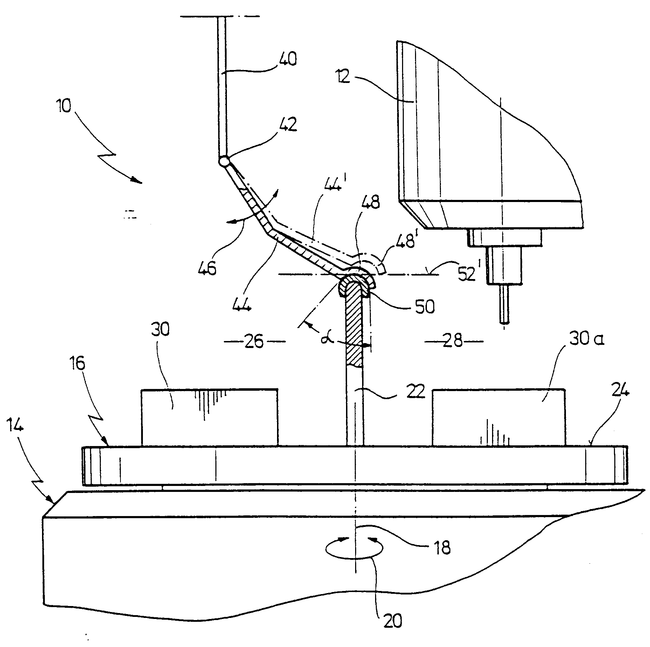

Weitere Vorteile ergeben sich aus der Beschreibung und der beigefügten Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein Ausführungsbeispiel der Erfindung ist in der Zeichnung dargestellt und wird in der nachfolgenden Beschreibung näher erläutert. Die einzige Figur zeigt eine Seitenansicht, teilweise aufgebrochen und abgebrochen, eines Ausführungsbeispiels einer erfindungsgemäßen Werkzeugmaschine.

In der Figur bezeichnet 10 insgesamt eine Werkzeugmaschine, vorzugsweise ein sogenanntes Bearbeitungszentrum, d.h. eine numerisch gesteuerte Werkzeugmaschine, in der mittels einer Vielzahl auswechselbarer Werkzeuge nacheinander Bohr-Fräs und sonstige Arbeiten an Werkstücken vorgenommen werden können.

Die Werkzeugmaschine 10 weist im dargestellten Ausführungsbeispiel einen vertikalachsigen Spindelstock 12 auf, der vorzugsweise entlang der drei kartesischen Raumkoordinaten bewegbar ist, wie dies an sich bekannt ist.

Auf einem stationären Maschinenbett 14 befindet sich ein Werkstücktisch 16, der um eine vertikale Achse 18 jeweils gegenläufig um 180° drehbar ist, wie mit einem Pfeil 20 angedeutet. Entlang eines Durchmessers des Werkstücktisches 16 ist an diesem eine erste Spritzschutzwand 22 angeordnet, die vorzugsweise senkrecht von einer Oberfläche 24 des Werkstücktisches 16 absteht.

Die erste Spritzschutzwand 22 unterteilt den Raum oberhalb der Oberfläche 24 in eine Bestückungsseite 26 und eine Bearbeitungsseite 28. Werkstücke 30 bzw. 30a sind auf der Bestückungsseite 26 bzw. der Bearbeitungsseite 28 angeordnet.

Eine zweite Spritzschutzwand 40 ist raumfest oberhalb des Werkstücktisches 16 angeordnet. Sie erstreckt sich von einem in der Figur nicht dargestellten oberen Rahmen oder sonstigen Ende der Maschinenverkleidung senkrecht nach unten und verläuft im wesentlichen parallel zur ersten Spritzschutzwand 22. Sie ist jedoch um einen gewissen Betrag gegenüber der ersten Spritzschutzwand 22 zur Bestückungsseite 26 hin versetzt.

An der Unterseite der zweiten Spritzschutzwand 40 befindet sich ein scharnierartiges Gelenk 42, mit dem eine dritte Spritzschutzwand 44 an der zweiten Spritzschutzwand 40 angelenkt ist. Die dritte Spritzschutzwand 44 ist somit gegenüber der zweiten Spritzschutzwand 40 verschwenkbar, wie mit einem Pfeil 46 und den Positionen 44, 44' der dritten Spritzschutzwand angedeutet. Die dritte Spritzschutzwand 44 kann beispielsweise leicht abgekröpft verlaufen und läuft an ihrem unteren Ende vorzugsweise in eine Rinne 48 aus, die parallel zum Gelenk 42 verläuft.

Die Rinne 48 umgreift eine Leiste 50, die oben auf die erste Spritzschutzwand 22 aufgesetzt ist. Die Leiste 50 hat eine Oberkante, die in der durchgezogen gezeigten Stellung der Figur senkrecht zur Zeichenebene verläuft, während sie in einer um 90° verschwenkten Stellung des Werkstücktischs 16 in der Zeichenebene liegt und dort mit 52' bezeichnet ist. Die Leiste 50 besteht vorzugsweise aus einem Material mit hoher Gleitfähigkeit, insbesondere einem Kunststoff, vorzugsweise Polytetrafluorethylen.

Die Rinne 48 ist so bemessen, daß ihr Öffnungswinkel α hinreichend groß ist, d.h. die vorzugsweise halbzylindrisch ausgebildete Leiste 50 mit einem Umfangswinkel von deutlich weniger als 180° umfaßt.

Die dritte Spritzschutzwand 44 kann aber auch ohne Rinne 48 ausgebildet sein und dann tangential auf der Oberkante der ersten Spritzschutzwand 22 aufliegen. In diesem Fall ist vorzugsweise am freien Ende der dritten Spritzschutzwand 44 unten eine vorstehende Gleitschiene angebracht, die beim Verschwenken des Werkstücktisches 16 z.B. auf der Schiene 50 gleitet.

Die Wirkungsweise der Anordnung ist wie folgt:

In der in der Figur dargestellten durchgezogenen Endstellung des Werkstücktisches 16 liegt die dritte Spritzschutzwand 44 mit der Rinne 48 formschlüssig auf der Leiste 50 auf. Damit besteht ein vollkommener Spritzschutz zwischen der Bearbeitungsseite 28 und der Bestückungsseite 26, weil die beim Bearbeiten des Werkstücks 30a herumfliegenden Werkstoffspäne und das herumspritzende Schmiermittel an den Spritzschutzwänden 40, 44, 22 nach unten ablaufen und keinen Weg auf die Bestückungsseite 26 finden können. Auf der Bestückungsseite 26 kann damit das zuvor bearbeitete Werkstück entnommen und ein neues, noch unbearbeitetes Werkstück 30 aufgespannt werden.

Wird nun nach der Beendigung des Bearbeitungsvorganges am Werkstück 30a der Werkstücktisch 16 um die Achse 18 um einen Winkel von 180° verschwenkt, so löst sich die Leiste 50 aus der Rinne 48, weil die Auflage der Rinne 48 auf der Leiste 50 insoweit keinen starren Formschluß herbeiführt. Die dritte Spritzschutzwand 44 wird angehoben, weil die Oberkante der Leiste 50 aus der Rinne 48 herausrutscht und an deren Unterkante entlang läuft. Wenn der Werkstücktisch 16 um 90°, d.h. den halben Verschwenkweg, verschwenkt ist, befindet sich die dritte Spritzschutzwand 44 mit der Rinne 48' in ihrer maximal angehobenen Stellung, wie in der Figur strichpunktiert dargestellt ist. Wird nun die Drehbewegung des Werkstücktisches 16 fortgesetzt, so fällt die Leiste 50 wiederum in die Rinne 48' bzw. 48 ein.

Da die dritte Spritzschutzwand 44 geneigt verläuft, ist der Arbeitsraum oberhalb der Bearbeitungsseite 28 größer als der Arbeitsraum oberhalb der Bestückungsseite 26. Wie man aus der Figur deutlich erkennen kann, gestattet dies ein Verfahren des Spindelstocks 12 bis an die Symmetrielinie des Werkstücktisches 16 heran, weil die ausladenden Teile des Spindelstocks 16 dann bis über die Bestückungsseite 26 hinausragen können.

## Patentansprüche

1. Werkzeugmaschine mit einem um eine vertikale Achse (18) drehbaren Werkstücktisch (16), der mittels einer im wesentlichen entlang eines Durchmessers des Werkstücktisches (16) am Werkstücktisch (16) befestigten ersten Spritzschutzwand (22) in eine Bestückungsseite (26) und eine Bearbeitungsseite (28) unterteilt ist, mit einer raumfesten, oberhalb der ersten Spritzschutzwand (22) angeordneten zweiten Spritzschutzwand (40), die im wesentlichen parallel zur ersten Spritzschutzwand (22) verläuft, und mit gelenkigen Verbindungsmitteln (42, 44) zwischen der ersten und der zweiten Spritzschutzwand (22, 40), die an einer Oberkante (52') der ersten Spritzschutzwand (22) angreifen, wobei die erste Spritzschutzwand (22) starr mit dem Werkstücktisch (16) verbunden ist und die Verbindungsmittel (42, 44) eine dritte Spritzschutzwand (44) umfassen, die an ihrer Oberseite scharnierartig (42) mit der zweiten Spritzschutzwand (40) verbunden ist, dadurch gekennzeichnet, daß die dritte Spritzschutzwand (44) lose mit ihrer Unterseite auf der Oberkante (52') aufliegt, wobei die scharnierartige Verbindung (42) zwischen der Oberseite der dritten Spritzschutzwand (44) und der zweiten Spritzschutzwand (40) gegenüber der ersten Spritzschutzwand (22) zur Bestückungsseite (26) seitlich versetzt ist.

2. Werkzeugmaschine nach Anspruch 1, dadurch gekennzeichnet, daß die Unterseite der dritten Spritzschutzwand (44) mit einer Rinne (48) versehen ist, die die Oberkante (52') über eine endliche Länge umschließt.

3. Werkzeugmaschine nach Anspruch 1 oder 2, dadurch gekennzeichnet, daß die Oberkante (52') durch eine Leiste (50) eines gleitfähigen Materials gebildet wird.

4. Werkzeugmaschine nach einem oder mehreren der Ansprüche 1 bis 3, dadurch gekennzeichnet daß die dritte Spritzschutzwand (44) geneigt verläuft.

5. Werkzeugmaschine nach einem der Ansprüche 1 bis 4, dadurch gekennzeichnet, daß die dritte Spritzschutzwand (44) als einstückiges Wandteil ausgebildet ist.

## Claims

1. A machine tool comprising a workpiece table (16) rotatable about a vertical axis (18) and being divided into a placement side (26) and a machining side (28) by means of a first spray shielding panel (22) mounted substantially along a diameter of said workpiece table (16), a stationary second spray shielding panel (40) arranged above said first spray shielding panel (22) and running substantially parallel to said first spray shielding panel (22), and articulated connection means (42, 44) arranged between said first and second spray shielding panels (22, 40) and acting upon an upper edge (52') of said first spray shielding panel (22), wherein said first spray shielding panel (22) is rigidly attached to said workpiece table (16) and said connection means (42, 44) comprise a third spray shielding panel (44) connected at its top portion in a hinged manner (42) to said second spray shielding panel (40), characterized in that said third spray shielding panel (44) rests at its bottom portion loosely at said upper edge (52), whereby said hinged connection (42) between said top portion of said third spray shielding panel (44) and said second spray shielding panel (40) is laterally offset to said placement side (26) as compared to said first spray shielding panel (22).

2. The machine tool of claim 1, characterized in that the bottom portion of the third spray shielding panel (44) is provided with a channel (48) that encloses the upper edge (52') over a finite length.

3. The machine tool of claim 1 or claim 2, characterized in that said upper edge consists of a strip (50) of a low-friction material.

4. The machine tool according to one or more of claims 1 through 3, characterized in that said third spray shielding panel (44) is inclined.

5. The machine tool according to any of claims 1 through 4, characterized in that said third spray shielding panel (44) is constructed as a one-piece panel part.

## Revendications

1. Machine-outil avec une table porte-pièce (16), pouvant tourner autour d'un axe vertical (18), qui est partagée, au moyen d'une première paroi de protection (22) contre les projections, fixée sur la table porte-pièce (16), sensiblement le long d'un diamètre de la table porte-pièce (16), en un côté d'équipement (26) et un côté d'usinage (28), avec une deuxième paroi de protection (40) contre les projections, fixe dans l'espace, située au-dessus de la première paroi de protection (22) contre les projections, qui s'étend sensiblement parallèlement à la première paroi de protection (22) contre les projections, et avec des moyens de liaison (42, 44) articulés entre la première et la deuxième paroi de protection (22, 40) contre les projections, qui agissent sur un bord supérieur (52') de la première paroi de protection (22) contre les projections, la première paroi de protection (22) contre les projections étant reliée rigidement à la table porte-pièce (16) et les moyens de liaison (42, 44) comprenant une troisième paroi de protection (44) contre les projections qui, sur sa face supérieure, est reliée à la manière d'une charnière (42) avec la deuxième paroi de protection (40) contre les projections, caractérisée en ce que la troisième paroi de protection (44) contre les projections repose librement avec sa face inférieure sur le bord supérieur (52'), la liaison du type d'une charnière (42) entre la face supérieure de la troisième paroi de protection (44) contre les projections et la deuxième paroi de protection (40) contre les projections, étant décalée latéralement par rapport à la première paroi de protection (22) contre les projections, vers le côté d'équipement (26).

2. Machine-outil selon la revendication 1, caractérisée en ce que la face inférieure de la troisième paroi de protection (44) contre les projections est pourvue d'une gorge (48), qui entoure le bord supérieur (52') sur une longueur finie.

3. Machine-outil selon la revendication 1 ou 2, caractérisée en ce que le bord supérieur (52') est formé par une baguette (50) d'un matériau glissant.

4. Machine-outil selon une ou plusieurs des revendications 1 à 3, caractérisée en ce que la troisième paroi de protection (44) contre les projections est inclinée.

5. Machine-outil selon l'une des revendications 1 à 4, caractérisée en ce que la troisième paroi de protection (44) contre les projections est configurée en élément de paroi de protection contre les projections d'une seule pièce.
